# FASCICULE DE BREVET EUROPEEN

(11) **EP 1 647 871 B1**
(45) Date de publication et mention de la délivrance du brevet: **29.08.2007**
(21) Numéro de dépôt: 05356187.4
(22) Date de dépôt: 17.10.2005
(51) Int. Cl.: G05D 23/13, F01P 7/16

(54) **Vanne thermostatique pour un circuit fluide, moteur thermique associé à un circuit de refroidissement comportant une telle vanne, et procédé de fabrication d'une telle vanne**
Thermostat für einen Kreislauf, Verbrennungsmotor mit einem einen solchen Thermostat enthaltenden Kühlkreislauf verknüpft und Verfahren zur Herstellung eines solchen Thermostates
Thermostat for a fluid circuit, thermal engine associated to a cooling circuit containing such a thermostat, and manufacturing process of such a thermostat

(30) Priorité: 18.10.2004 FR 0411010
(43) Date de publication de la demande: 19.04.2006
(73) Titulaire: VERNET S.A., 91340 Ollainville (FR)
(72) Inventeur: Maraux, Thierry, 78340 Les Clayes sous Bois (FR); Bouloy, Alain, 91580 Etrechy (FR)
(74) Mandataire: Myon, Gérard Jean-Pierre

(56) Documents cités:
- EP-A- 0 853 267
- FR-A- 2 853 710
- US-A1- 2002 070 367
- US-A1- 2004 163 612

## Description

La présente invention concerne une vanne thermostatique pour un circuit de fluide, comportant un thermostatique pour un circuit de fluide, comportant un élément thermostatique à matière dilatable. Elle concerne également un moteur thermique associé à un circuit de fluide de refroidissement muni d'une telle vanne, ainsi qu'un procédé de fabrication d'une telle vanne.

Dans de nombreuses applications du domaine fluidique, notamment pour le refroidissement de moteurs thermiques de véhicules, de telles vannes sont utilisées pour répartir un fluide entrant dans différentes voies de circulation en fonction de la température de ce fluide entrant. Pour répartir le fluide en fonction d'autres paramètres, notamment de conditions extérieures à la vanne, comme la température ambiante ou la charge du véhicule propulsé par le moteur équipé de la vanne, il est connu de prévoir des moyens de chauffage électrique de la matière dilatable contenue dans l'élément thermostatique de la vanne. Le pilotage de l'actionnement de cet élément thermostatique est alors possible depuis l'extérieur de la vanne, indépendamment ou en complément de la température du fluide entrant, notamment au moyen d'un calculateur embarqué dans le véhicule et programmé en conséquence.

Il est cependant nécessaire d'alimenter en électricité les moyens de chauffage, tels qu'une résistance chauffante, localisés dans la matière dilatable de l'élément thermostatique, alors que ce dernier baigne au moins en partie dans le courant de fluide à réguler par la vanne.

Pour contourner en partie cette difficulté, il est connu d'agencer la résistance chauffante à l'intérieur d'un piston de l'élément thermostatique, immergé en partie dans la matière dilatable et monté coulissant par rapport au corps de l'élément thermostatique contenant cette matière. En immobilisant le piston par rapport au boîtier de vanne, l'alimentation de la résistance provoque la dilatation de la matière, ce qui entraîne le coulissement du corps de l'élément thermostatique autour du piston fixe, un obturateur étant porté par ce corps de manière à agir sur la circulation du fluide dans la vanne.

L'agencement d'un tel « piston chauffant » au sein de la vanne, comme proposé dans EP-A-0 853 267, est cependant complexe à réaliser et pose des problèmes d'étanchéité, en particulier au niveau de la zone de jonction électrique entre les bornes de connexion du piston chauffant, accessibles depuis l'extérieur du boîtier, et un élément d'alimentation électrique, tel qu'un câble ou analogue.

Le but de la présente invention est de proposer une vanne thermostatique à piston chauffant, dont la fabrication est simplifiée, tout en garantissant une bonne étanchéité au niveau de la zone d'alimentation électrique du piston chauffant.

A cet effet, l'invention a pour objet une vanne thermostatique pour un circuit de fluide, telle que définie à la revendication 1.

L'étanchéité au niveau de la base de branchement de la vanne selon l'invention est ainsi essentiellement assurée par le boîtier de vanne. De la sorte, l'alimentation électrique des moyens de raccordement s'effectue dans de bonnes conditions d'étanchéité, et ce quand bien même un câble d'alimentation électrique est successivement branché et débranché lors de l'installation et de l'entretien de la vanne au sein du circuit de fluide. La fabrication de la vanne s'en trouve par ailleurs simplifiée, notamment par réduction du nombre d'éléments d'étanchéité à utiliser. L'utilisation de l'embase de support, à mettre en place dans la cavité borgne par l'intérieur du boîtier, facilite la fabrication de la vanne : d'un côté, on peut disposer de boîtiers de vanne standardisés, notamment au niveau de la base de branchement liée au reste du boîtier de manière solide et précise, tandis que, de l'autre côté, différents types d'embase peuvent être rapportés dans le boîtier, notamment selon les caractéristiques dimensionnelles et fonctionnelles de l'élément thermostatique prévu dans la vanne.

D'autres caractéristiques de cette vanne thermostatique, prises isolément ou selon toutes les combinaisons techniquement possibles, sont énoncées aux revendications 2 à 6.

L'invention a également pour objet un moteur thermique associé à un circuit de fluide de refroidissement, lequel circuit comporte une vanne telle que définie ci-dessus.

L'invention a en outre pour objet un procédé de fabrication d'une vanne telle que définie ci-dessus, tel que défini à la revendication 8.

Des caractéristiques avantageuses de ce procédé sont définies aux revendications 9 et 10.

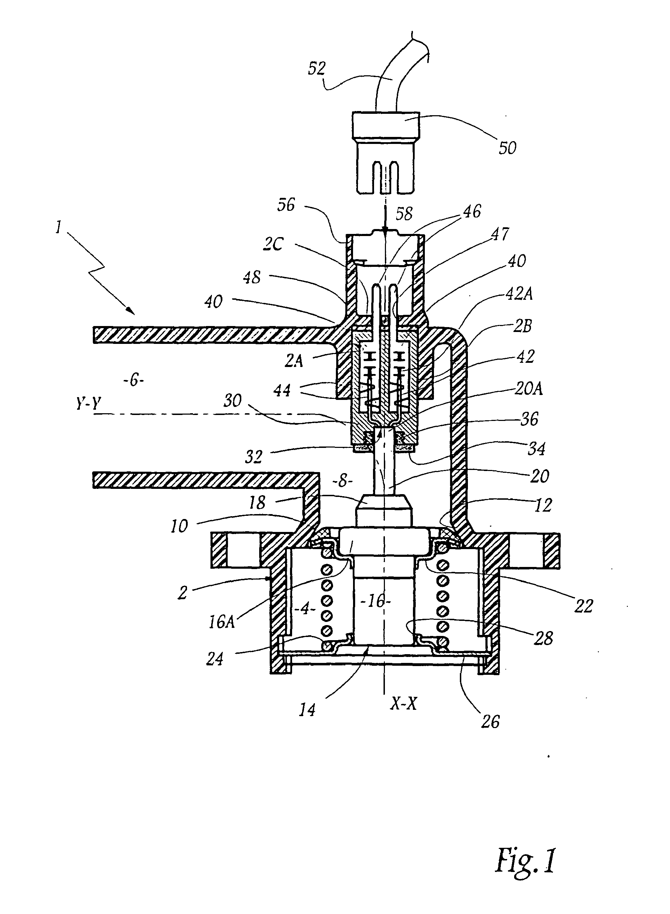

L'invention sera mieux comprise à la lecture de la description qui va suivre, donnée uniquement à titre d'exemple et faite en se référant au dessin sur lequel la figure 1 est une vue schématique en coupe longitudinale d'une vanne thermostatique selon l'invention.

Sur la figure 1 est représentée une vanne thermostatique 1 adaptée pour équiper un circuit de refroidissement, notamment pour un moteur thermique de véhicule automobile. Cette vanne comporte un boîtier rigide 2 réalisé en une matière plastique et comportant deux conduits 4 et 6 qui s'étendent suivant des directions longitudinales respectives X-X et Y-Y sensiblement perpendiculaires l'une à l'autre. Les conduits débouchent l'un dans l'autre au niveau d'une zone de jonction coudée 8 du boîtier 2. A titre d'exemple, lorsque la vanne 1 est utilisée dans un circuit de refroidissement d'un moteur thermique, le conduit 4 est alimenté en fluide froid destiné à communiquer, sous certaines conditions détaillées ci-après et via la zone 8, avec le conduit 6 qui forme une sortie de fluide froid en direction d'un échangeur thermique.

La vanne 1 est équipée d'un clapet 10 de régulation du débit de fluide du conduit 4 au conduit 6, via la zone 8. Ce clapet 10 est associé à un siège 12 délimité intérieurement par le boîtier 2. Le clapet est prévu pour s'écarter ou se rapprocher du siège 12, de sorte que, lorsque le clapet est en appui contre son siège, le débit de fluide passant du conduit 4 au conduit 6 est sensiblement nul, tandis que, lorsque le clapet est écarté de ce siège, le fluide alimentant le conduit 4 passe pratiquement librement dans le conduit de sortie 6.

Pour commander le déplacement du clapet 10 par rapport au siège 12, la vanne 1 est équipée d'un élément thermostatique 14 qui comprend :
- un corps 16 constitué d'un matériau bon conducteur de la chaleur, par exemple métallique, et contenant intérieurement une matière dilatable, généralement de la cire, confinée de manière étanche par un couvercle 18, et
- un piston 20 sous forme d'une tige mobile par rapport au corps 16, dont une extrémité (non visible sur la figure) est immergée dans le corps 16 de manière à ce que la dilatation de la cite entraîne un coulissement relatif entre le piston et le corps.

A l'état assemblé de la vanne 1, c'est-à-dire dans son état représenté à la figure 1, l'élément thermostatique 14 est disposé co-axialement au conduit 4, c'est-à-dire que son axe longitudinal est sensiblement confondu avec l'axe X-X, et le corps 16 de cet élément thermostatique est disposé dans le conduit d'entrée 4, en amont du clapet 10 qui est solidarisé au corps 16, à son extrémité 16A au niveau de laquelle le piston 20 coulisse suivant l'axe X-X. Le clapet 10 est solidarisé au corps 16 par l'intermédiaire d'une couronne rigide pleine 22 dans laquelle l'extrémité 16A est emmanchée à force.

A l'état assemblé de la vanne 1, le piston 20 est immobilisé par rapport au boîtier 2, par des aménagements décrits ci-après. En conséquence, lorsque la cire contenue dans le corps 16 est chauffée et se dilate, le corps 16 est entraîné en translation suivant l'axe X-X, du côté opposé à celui du piston. Autrement dit, sur la figure 1, le corps 16 est alors translaté vers le bas et entraîne le clapet 10, par l'intermédiaire de la couronne 22, libérant le siège 12. Pour permettre le rappel du clapet vers son siège lorsque la cire se refroidit, la vanne 1 est équipée d'un ressort de compression 24 interposé entre la couronne 22 et un étrier rigide ajouré 26 solidarisé au boîtier 2. Cet étrier délimite une ouverture centrale 28 à l'intérieur de laquelle le corps 16 est librement coulissant suivant l'axe X-X, cette ouverture formant ainsi un guide en déplacement du corps 16.

L'immobilisation du piston 20 vis-à-vis du boîtier 2 est réalisée par une embase rigide 30 constituée d'une matière plastique, notamment celle du boîtier 2. Cette embase 30 délimite à cet effet un logement borgne 32 de réception de l'extrémité libre 20A du piston 20, cette extrémité 20A étant prévue en appui contre le fond du logement 32. Une douille 34 de liaison mécanique est agencée entre le piston et l'embase 32, avec interposition d'un joint d'étanchéité 36.

A l'état assemblé de la vanne 1, l'embase 30 est reçue de manière fixe dans une cavité borgne 2A sensiblement complémentaire de l'embase et délimitée intérieurement par le boîtier 2. A titre d'exemple, l'embase 30 se présente globalement sous la forme d'un cylindre d'axe X-X, reçu dans la cavité 2A également cylindrique et délimitée par une paroi annulaire 2B d'axe longitudinal X-X.

L'embase 30 est immobilisée dans la cavité 2A en étant par exemple emmanchée à force ou clipsée.

Pour commander le déplacement du clapet 10 de façon complémentaire ou indépendante de la température du fluide entrant dans la vanne 1 par le conduit 4, le piston 20 est équipé intérieurement d'une résistance électrique chauffante (non visible sur la figure). On comprend que, lorsque cette résistance est alimentée en électricité, la cire contenue dans le corps 16 de l'élément thermostatique 14 se dilate et que, comme expliqué ci-dessus, le corps 16 est translaté de manière à s'éloigner de l'embase 30.

La circulation du courant d'alimentation de cette résistance chauffante est prévue par une paire de barrettes conductrices 40 portées par l'embase et raccordées, via une paire de fils électriques 42, aux bornes de la résistance électrique chauffante. Chaque barrette 40 est connectée à la borne 42A d'un des fils 42, opposée à la borne de ce fil connectée à la résistance chauffante. Chaque fil est mécaniquement retenu contre la barrette par des languettes de pincement 44 soudées ou serties sur la barrette.

Chaque barrette 40 comprend une broche de contact électrique 46 prévue pour être alimentée, par contact, en un courant extérieur à la vanne 1. Chaque barrette 40 est noyée dans la matière plastique constituant l'embase 30, excepté au niveau de sa broche 46 qui s'étend, au moins en partie, en saillie de cette matière. A l'état assemblé de la vanne 1, les parties saillantes des broches 46 sont accessibles depuis l'extérieur du boîtier 2, en étant disposées dans des passages complémentaires 47 traversant de part en part la paroi 2C du boîtier 2 constituant le fond de la cavité 2A. Ces passages sont étanchés par une garniture sensiblement plane 48 interposée, suivant l'axe X-X, entre l'embase 30 et la paroi de fond 2C.

Les broches 46 sont conformées pour pouvoir être introduites dans une prise d'alimentation électrique 50 reliée, via un câble 52, à une source d'alimentation non représentée. La prise 50 est connectée par contact aux broches 46, en étant engagée, comme indiqué par la flèche 58, et immobilisée, de manière amovible, dans une base de branchement 56 venue de matière avec le boîtier 2. Cette base s'étend globalement autour de l'axe X-X, en saillie, vers l'extérieur du boîtier, depuis la paroi de fond 2C. Les broches 46 sont disposées dans le volume interne de cette base 56.

En d'autres termes, les broches 46 et la base 56 constituent une prise de contact électrique, associée de façon complémentaire à la prise d'alimentation 50 qui peut ainsi être branchée et débranchée à volonté vis-à-vis des broches 46 et de la base 56.

La fabrication de la vanne 1 s'effectue en disposant, d'une part, du boîtier 2 moulé d'une seule pièce avec la base de branchement 56 et, d'autre part, d'un ensemble comprenant l'embase 30 munie des barrettes 40 et du piston 20. Cet ensemble est obtenu par moulage de l'embase 30 autour des barrettes 40 préalablement raccordées électriquement à la résistance chauffante logée dans le piston 20 par les fils 42 retenus par les languettes 44.

L'ensemble précité est ensuite rapporté à l'intérieur du boîtier 2, en y étant introduit suivant l'axe X-X via le conduit 4, jusqu'à immobilisation de l'embase 30 dans la cavité 2A, avec interposition de la garniture d'étanchéité 48.

Pour faciliter la mise en place de l'embase 30 à l'intérieur de la cavité 2A, le piston 20 est manipulé alors qu'il n'est pas encore introduit pour partie dans le corps 16 de l'élément thermostatique 14, ce corps, muni de la couronne 22 et du clapet 10, pouvant être rapporté lors d'une étape d'assemblage ultérieure.

Divers aménagements et variantes à la vanne 1 décrite ci-dessus sont en outre envisageables. En particulier, la forme et la géométrie des conduits 4 et 6 et de la zone de jonction 8 peuvent être aménagées en fonction de la zone d'implantation de la vanne au sein du circuit de circulation du fluide à réguler. Par ailleurs, à titre optionnel, le corps 16 de l'élément thermostatique peut être équipé, au niveau de son extrémité opposée à son extrémité 16A, d'un autre clapet, dit clapet de by-pass, adapté pour être entraîné en mouvement par le corps 16. Lorsque l'élément thermostatique 14 est actionné, ce clapet de by-pass obture partiellement ou totalement un accès de fluide supplémentaire délimité par le boîtier 2 ou par un boîtier secondaire rapporté sur le boîtier 2.

En outre, à titre de variante non représentée, la prise de contact comprenant la base 56 et les broches 46 peut présenter une configuration mâle, complémentaire d'une prise d'alimentation femelle.

## Revendications

1. Vanne thermostatique (1) pour un circuit de fluide, comportant :
- un boîtier (2) délimitant intérieurement au moins une voie de circulation de fluide,
- un obturateur (10) de la voie de circulation,
- un élément thermostatique (14) qui comprend, d'une part, un corps (16) contenant une matière dilatable, disposé sur le trajet du fluide suivant la voie de circulation et portant l'obturateur (10), et, d'autre part, un piston (20) immobilisé par rapport au boîtier (2) et apte à coulisser par rapport au corps de l'élément thermostatique sous l'action de la matière dilatable échauffée,
- des moyens de chauffage électrique de la matière dilatable, disposés, au moins en partie, à l'intérieur du piston (20) de l'élément thermostatique (14), et
- des moyens (30, 40, 42, 44, 56) de raccordement électrique entre l'extérieur du boîtier (2) et les moyens de chauffage, comprenant à la fois au moins une broche de contact électrique (46), accessible depuis l'extérieur du boîtier, une base (56) de branchement d'un élément (50) d'alimentation électrique de la ou des broches de contact, des conducteurs électriques (40, 42) qui raccordent la ou les broches de contact aux moyens de chauffage, et une embase (30) de support des conducteurs et de la ou des broches de contact, solidarisée au boîtier (2),
**caractérisée en ce que** l'embase de support (30) est adaptée pour être rapportée et immobilisée dans une cavité borgne sensiblement complémentaire (2A), délimitée intérieurement par le boîtier (2), et **en ce qu'**une paroi de boîtier (2C) traversée par la ou les broches de contact (46), avec interposition d'une garniture d'étanchéité (43), délimite, sur un côté, la cavité (2A) et, sur l'autre côté, la base de branchement (56) qui est venue de matière avec le boîtier.

2. Vanne suivant la revendication 1, **caractérisée en ce que** la base de branchement (56) s'étend globalement autour de la direction (X-X) de coulissement du piston (20), en saillie, vers l'extérieur du boîtier (2), depuis la paroi de boîtier (2C) traversée par la ou les broches de contact (46).

3. Vanne suivant l'une des revendications 1 ou 2, **caractérisée en ce que** la cavité borgne (2A) présente globalement une forme cylindrique et est délimitée par une paroi de boîtier annulaire (2B) dont l'axe longitudinal (X-X) correspond à la direction de coulissement du piston (20).

4. Vanne suivant l'une quelconque des revendications précédentes, **caractérisé en ce que** l'embase de support (30) est réalisée en une matière plastique, notamment celle constituant le boîtier (2).

5. Vanne suivant l'une quelconque des revendications précédentes, **caractérisée en ce que** les conducteurs comprennent au moins un fil électrique (42) possédant une première borne connectée aux moyens de chauffage et une seconde borne (42A) raccordée au(x) broche(s) de contact (46), et **en ce que** les moyens de raccordement comportent au moins une languette (44) de retenue mécanique dudit fil par rapport au(x) broche (s).

6. Vanne suivant la revendication 5, **caractérisée en ce que** les conducteurs comprennent au moins une barrette (40) venue de matière avec la broche (46) et à laquelle est connectée la seconde borne (42A) du fil électrique (42), et **en ce que** la languette (44) est soudée ou sertie sur cette barrette.

7. Moteur thermique associé à un circuit de fluide de refroidissement du moteur, lequel circuit comporte une vanne (1) conforme à l'une quelconque des revendications précédentes.

8. Procédé de fabrication d'une vanne thermostatique conforme à l'une quelconque des revendications 1 à 6, lequel procédé comporte des étapes consistant à :
- mouler le boîtier (2) de la vanne (1), et
- disposer de l'embase de support (30) portant la ou les broches (46) et les conducteurs (40, 42),
**caractérisé en ce que** la base de branchement (56) est moulée conjointement avec le boîtier (2) à l'intérieur duquel est délimitée la cavité borgne (2A), et **en ce que** l'embase de support (30) est ensuite rapportée à l'intérieur du boîtier jusqu'à son immobilisation dans la cavité borgne, avec interposition de la garniture d'étanchéité (48).

9. Procédé suivant la revendication 8, **caractérisé en ce que** l'embase de support (30) est rapporté à l'intérieur du boîtier (2) en y étant introduit suivant la direction (X-X) de coulissement du piston (20), via la voie de circulation de fluide.

10. Procédé suivant l'une des revendications 8 ou 9, **caractérisé en ce que** l'embase de support (30) est immobilisée dans la cavité borgne (2A) par emmanchement à force ou par clipsage.

## Claims

1. Thermostatic valve (1) for a fluid circuit, comprising:
- a casing (2) internally delimiting at least one fluid circulation channel,
- a shutter (10) of the circulation channel,
- a thermostatic element (14) that comprises, on the one hand, a body (16), containing a dilatable material, placed in the path of the fluid along the circulation channel and supporting the shutter (10), and, on the other hand, a piston (20) immobilized relative to the casing (2) and capable of sliding relative to the body of the thermostatic element under the action of the heated dilatable material,
- electric means of heating the dilatable material, placed, at least partly, inside the piston (20) of the thermostatic element (14), and
- means (30, 40, 42, 44, 56) of electric connection between the outside of the casing (2) and the heating means comprising both at least one electric contact pin (46), accessible from outside the casing, a base (56) for connecting an element (50) of electric supply on the contact pin or pins, electric conductors (40, 42) that connect the contact pin or pins to the heating means, and a socket (30), for supporting the conductors and the contact pin or pins, fixedly attached to the casing (2),
**characterized in that** the supporting socket (30) is suitable for being fitted and immobilized in a substantially matching blind cavity (2A), internally delimited by the casing (2), and **in that** a casing wall (2C) traversed by the contact pin or pins (46), with interposition of a sealing gland (48), delimits, on one side, the cavity (2A) and, on the other side, the connection base (56) that is formed as an integral part of the casing.

2. Valve according to Claim 1, **characterized in that** the connection base (56) extends generally around the direction (X-X) of sliding of the piston (20), in protrusion, towards the outside of the casing (2), from the casing wall (2C) traversed by the contact pin or pins (46).

3. Valve according to one of Claims 1 or 2, **characterized in that** the blind cavity (2A) is of generally cylindrical shape and is delimited by an annular casing wall (2B) whose longitudinal axis (X-X) corresponds to the direction of sliding of the piston (20).

4. Valve according to any one of the preceding claims, **characterized in that** the supporting socket (30) is made of a plastic, particularly that forming the casing (2).

5. Valve according to any one of the preceding claims, **characterized in that** the conductors comprise at least one electric wire (42) having a first terminal connected to the heating means and a second terminal (42A) connected to the contact pin(s) (46), and **in that** the connection means comprise at least one tab (44) for mechanical retention of the said wire relative to the pin(s).

6. Valve according to Claim 5, **characterized in that** the conductors comprise at least one connecting strip (40) formed as an integral part of the pin (46) and to which the second pin (42A) of the electric wire (42) is connected, and **in that** the tab (44) is soldered or crimped to this connecting strip.

7. Internal combustion engine associated with a circuit of fluid for cooling the engine, which circuit comprises a valve (1) according to any one of the preceding claims.

8. Method of manufacturing a thermostatic valve according to any one of Claims 1 to 6, which method comprises steps consisting in:
- moulding the casing (2) of the valve (1), and
- placing the supporting socket (30) supporting the pin or pins (46) and the conductors (40, 42),
**characterized in that** the connection base (56) is moulded jointly with the casing (2) inside which the blind cavity (2A) is delimited, and **in that** the supporting socket (30) is then fitted inside the casing until it is immobilized in the blind cavity, with interposition of the sealing gland (48).

9. Method according to Claim 8, **characterized in that** the supporting socket (30) is fitted inside the casing (2) while being inserted therein in the direction (X-X) of sliding of the piston (20), via the fluid circulation channel.

10. Method according to any one of Claims 8 or 9, **characterized in that** the supporting socket (30) is immobilized in the blind cavity (2A) by forced sleeve-jointing or by clipping.

## Patentansprüche

1. Thermostatventil (1) für einen Flüssigkeitskreislauf, Folgendes umfassend :
- ein Gehäuse (2), das im Inneren mindestens einen Flüssigkeitszirkulationsweg abgrenzt;
- eine Verschlussvorrichtung (10) für den Zirkulationsweg,
- ein Thermostatelement (14), das einerseits einen Körper (16), der einen wärmedehnbaren Stoff enthält und auf der Flüssigkeitsstrecke entlang des Zirkulationswegs angeordnet ist und die Verschlussvorrichtung (10) trägt, und andererseits einen Kolben (20) umfasst, der in Bezug auf das Gehäuse (2) feststeht und in Bezug auf den Körper des Thermostatelements unter der Einwirkung des erwärmten wärmedehnbaren Stoffs gleiten kann,
- elektrische Heizeinrichtungen für den wärmedehnbaren Stoff, die zumindest teilweise im Inneren des Kolbens (20) des Thermostatelements (14) angeordnet sind, und
- elektrische Anschlussvorrichtungen (30, 40, 42, 44, 56) zwischen dem Äußeren des Gehäuses (2) und den Heizeinrichtungen, die gleichzeitig zumindest einen vom Äußeren des Gehäuses her zugänglichen elektrischen Kontaktstift (46), einen Anschlusssockel (56) für ein Stromversorgungselement (50) für den oder die Kontaktstift/e, Stromleiter (40, 42), die den oder die Kontaktstift/e mit den Heizeinrichtungen verbinden, und eine fest mit dem Gehäuse (2) verbundene Anschlussträgerleiste (30) für die Leiter und den oder die Kontaktstift/e umfassen,
**dadurch gekennzeichnet, dass** die Anschlussträgerleiste (30) dazu ausgelegt ist, in eine im Wesentlichen komplementäre, im Inneren durch das Gehäuse (2) abgegrenzte Blindausnehmung (2A) unbeweglich eingesetzt werden zu können, und dass eine Gehäusewand (2C), die von dem oder den Kontaktstift/en (46) mit einer dazwischen eingesetzten Dichtung (48) durchquert wird, auf einer Seite die Ausnehmung (2A) und auf der anderen Seite den Anschlusssockel (56) abgrenzt, der aus einem Material mit dem Gehäuse hergestellt ist.

2. Ventil nach Anspruch 1, **dadurch gekennzeichnet, dass** sich der Anschlusssockel (56) insgesamt um die Gleitrichtung (X - X) des Kolbens (20) zum Äußeren des Gehäuses (2) hin vorstehend ausgehend von der Gehäusewand (2C) erstreckt, die von dem oder den Kontaktstift/en (46) durchquert wird.

3. Ventil nach einem der Ansprüche 1 oder 2, **dadurch gekennzeichnet, dass** die Blindausnehmung (2A) insgesamt eine zylindrische Form aufweist und von einer ringförmigen Gehäusewand (2B) abgegrenzt ist, deren Längsachse (X - X) der Gleitrichtung des Kolbens (20) entspricht.

4. Ventil nach einem der vorhergehenden Ansprüche, **dadurch gekennzeichnet, dass** die Anschlussträgerleiste (30) aus einem Kunststoff hergestellt ist, insbesondere demjenigen, der das Gehäuse (2) bildet.

5. Ventil nach einem der vorhergehenden Ansprüche, **dadurch gekennzeichnet, dass** die Leiter mindestens einen elektrischen Draht (42) umfassen, der eine an die Heizeinrichtung angeschlossene erste Klemme und eine an den/die Kontaktstift/e (46) angeschlossene zweite Klemme (42A) besitzt, und dass die Anschlusseinrichtungen mindestens eine Zunge (44) zum mechanischen Halt des Drahts in Bezug auf den/die Stifte umfassen.

6. Ventil nach Anspruch 5, **dadurch gekennzeichnet, dass** die Leiter mindestens eine Leiste (40) umfassen, die aus einem Material mit dem Stift (46) hergestellt ist, und an welche die zweite Klemme (42A) des elektrischen Drahts (42) angeschlossen ist, und dass die Zunge (44) an dieser Leiste angelötet oder auf sie aufgequetscht ist.

7. Wärmemotor, der mit einem Kühlflüssigkeitskreislauf des Motors verbunden ist, welcher Kreislauf ein Ventil (1) nach einem der vorhergehenden Ansprüche umfasst.

8. Herstellungsverfahren für ein Thermostatventil nach einem der Ansprüche 1 bis 6, welches Verfahren die Schritte umfasst, die darin bestehen:
- Formgießen des Gehäuses (2) des Ventils (1), und
- Anordnen der Anschlussträgerleiste (30), die den oder die Stift/e (46) und die Leiter (40, 42) trägt,
**dadurch gekennzeichnet, dass** der Anschlusssockel (56) zusammen mit dem Gehäuse (2) formgegossen wird, in dessen Innerem die Blindausnehmung (2A) abgegrenzt ist, und dass dann die Anschlussträgerleiste (30) in das Innere des Gehäuses bis zu ihrer Festsetzung in der Blindausnehmung mit einer dazwischen eingesetzten Dichtung (48) eingesetzt wird.

9. Verfahren nach Anspruch 8, **dadurch gekennzeichnet, dass** die Anschlussträgerleiste (30) in das Innere des Gehäuses (2) eingesetzt wird, indem sie entlang der Gleitrichtung (X - X) des Kolbens (20) über den Flüssigkeitskreislauf in dieses eingeführt wird.

10. Verfahren nach einem der Ansprüche 8 oder 9, **dadurch gekennzeichnet, dass** die Anschlussträgerleiste (30) in der Blindausnehmung (2A) durch Aufpressen oder eine Clipverbindung festgesetzt wird.
